# EUROPEAN PATENT SPECIFICATION

(11) **EP 0 654 317 B1**
(45) Date of publication and mention of the grant of the patent: **22.12.1999**
(21) Application number: 94850184.6
(22) Date of filing: 21.10.1994
(51) Int. Cl.: B23B 27/14

(54) **Cutting tool insert**
Schneideeinsatz für Schneidwerkzeug
Plaquette de coupe pour outil de coupe

(30) Priority: 21.10.1993 SE 9303471
(43) Date of publication of application: 24.05.1995
(73) Proprietor: SANDVIK AKTIEBOLAG, 811 81 Sandviken (SE)
(72) Inventor: Näslund, Jonas, S-811 30 Sandviken (SE); Jonsson, Anders, S-804 27 Gävle (SE)
(74) Representative: Taquist, Lennart

(56) References cited:
- EP-A- 0 349 871
- EP-A- 0 489 701
- WO-A-92/05009
- DE-A- 4 310 131
- PATENT ABSTRACTS OF JAPAN vol. 12, no. 274 (M-725) (3121) 29 July 1988 & JP-A-63 057 102 (KYOCERA) 11 March 1988
- PATENT ABSTRACTS OF JAPAN vol. 11, no. 57 (M-564) (2504) 21 February 1987 & JP-A-61 219 503 (MITSUBISHI METAL) 29 September 1986

## Description

The present invention relates to a cutting tool insert according to the preamble of claim 1 and as known from EP-A-0 489 701. The invention aims to further develop such insert through a special microgeometry in order to obtain new and improved properties.

Inserts for chip forming machining consist of at least one main cutting edge and a connecting nose (corner). Such inserts are produced by powder metallurgical methods milling, pressing and sintering. As a result of the pressing operation the inserts obtain rather sharp edges. However, sharp edges break too easily when used. After the sintering the inserts are therefore subjected to an edge rounding operation including lapping, tumbling, brushing or blasting.

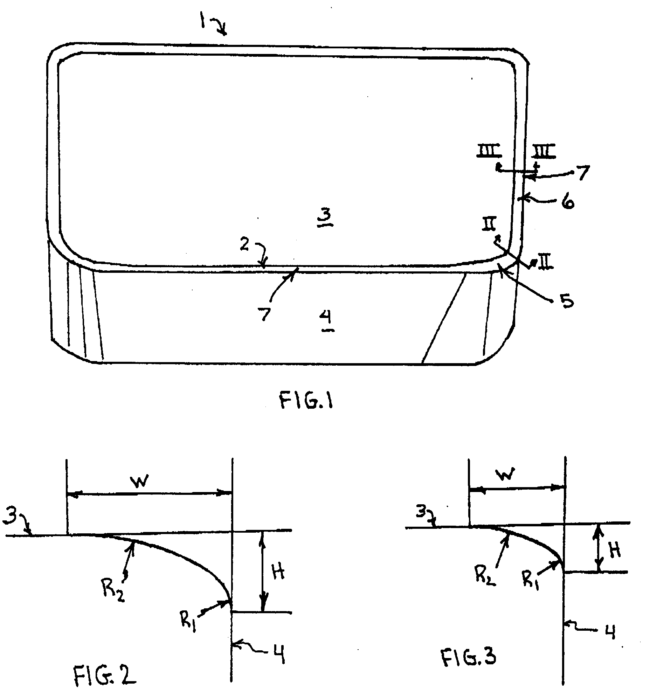

The edge rounding can be described by the W/H-ratio where W is the width of the edge rounding along the rake face and H is the length of the edge rounding along the clearance face, see FIG. 2. The edge rounding can also be closer defined in terms of the radius on the rake face, R₂, and on the clearance face, R₁.

When lapping, tumbling or brushing are used the edge rounding normally becomes larger in the nose area than along the main cutting edge whereas edge rounding by blasting is difficult to control with the desirable accuracy. In the prior art, the W/H-value is often essentially constant around the edge whereas the H-value varies. Moreover, in some cases no particular microgeometry seems to be aimed at.

The document EP-A-0 489 701 discloses a cutting insert having, in the nose area and along the cutting edges, different values of the ratio W/H. The present invention is based on the observation that the non-uniform edge roundings recited in the patent claim results in an insert with decreased flank wear and capable of withstanding increased feed rates.
FIG. 1 shows a perspective view of a cutting insert according to the invention after an edge rounding operation.
FIG. 2 shows a cross section of the insert of FIG. 1 along the line II-II.
FIG. 3 shows a cross section of the insert of FIG. 1 along the line III-III.

It has now been found that if a cutting insert is manufactured in such a way that the W/H-ratio decreases and H increases from the nose area to the middle of the main cutting edge less flank wear in the nose area and improved toughness behaviour on the main cutting edge are obtained. These favourable properties are particularly pronounced when machining steel or stainless steel.

As shown in FIG. 1, a cutting tool insert 1 includes a cutting edge 2 between rake face 3 and clearance face and a nose area or corner 5 between cutting edge 2 and another cutting edge 6. According to the invention W/H decreases from the nose area 5 to the middle 7 of the cutting edge. The W/H ratio in the nose area 5 (FIG. 2) shall be 1.5 - 2.3, preferably about 2 and 30<H<100 µm. For finishing operations 30<H<50 µm, medium operations 40<H<80 µm and roughing operations 60<H<100 µm. In the middle of the main cutting edge 7 (FIG. 3) the W/H-ratio shall be 0.8 - 1.6, preferably 1 - 1.4 and 50<H<300 µm. For finishing operations 50<H<100 µm, medium operations 75<H<150 µm and roughing operations 100<H<300 µm. In addition, the W/H-ratio in the nose area shall be at least 1.25 times the W/H-ratio on the main cutting edge and H on the main cutting edge shall be at least 1.1 times H in the nose area.

The radius on the clearance face, R₁, shall be 20 - 60 µm. For finishing operations 20<R₁<35 µm, medium operations 25<R₁<50 µm and roughing operations 30<R₁<60 µm. The radius on the rake face, R₂, shall be 100 - 250 µm.

The transition between the microgeometry in the nose area and the microgeometry in the main cutting edge shall successively take place along a length of the main cutting edge of at least 1 mm, preferably at least 1.5 mm. A transition length of about 30 % of the length of the main cutting edge has turned out to be particularly favourable.

For rhomboid inserts H and W are somewhat larger in the nose with >90° angle than in the nose with <90° angle.

The microgeometry of the edge according to the present invention can be used for all types of inserts and all cemented carbide, cermet i.e. titanium based carbonitride and ceramic grades. Particularly good results have been obtained for inserts with binder phase enriched surface zone, in particular for so called gamma phase depleted gradients as for example produced according to Swedish patent applications 9200530-5 and 9203851-2, the best results being obtained when the binder phase enrichment is present in the edge.

The inserts according to the invention can be coated with thin wear resistant coatings according to known CVD- or PVD-technique.

### Example 1

Turning inserts of type CNMM 120412-QR with a composition according to ISO P25 and with binder phase enriched surface zone were manufactured with the following microgeometry.

| | nose | main cutting edge |
|---|---|---|
| W/H | 2.0 | 1.05 |
| H | 50 µm | 90 µm |

As reference commercially available inserts with binder phase enriched surface zone and with an essentially constant W/H-value around the edge of 1.1 and H= 75 µm were used.

The inserts were coated with TiCN+Al₂O₃ by CVD.

The inserts were tested in a turning operation with the following cutting data:
Work piece material: SS 2541-03
Cutting depth: 3 mm
Feed: 0.3 mm/rev
Cutting speed: 260 m/min
Type of operation: Longitudinal turning

The flank wear reached 0.25 mm after 6.4 min for the reference and 11.8 min for the inserts according to the invention. The toughness was the same for the reference and the inserts according to the invention.

### Example 2

Turning inserts of type CNMM 120412-QR with a composition according ISO-P15 were manufactured without binder phase enrichment with the following microgeometry.

| | nose | main cutting edge |
|---|---|---|
| W/H | 1.75 | 1.0 |
| H | 55 µm | 90 µm |

The inserts were compared with commercially available inserts without binder phase enriched surface zone and with an essentially constant W/H-value around the edge of 1.15 and H= 70 µm.

The inserts were coated with thin coating of TiCN+Al₂O₃+TiN.

The toughness was tested in a turning operation with the following cutting data:
Work piece material: SS 1312
Cutting depth: 1.5 mm
Feed: 0.2-0.6 mm/rev
Cutting speed: 200 m/min
Type of operation: Longitudinal interrupted turning

The feed where 50 % of the inserts was broken was determined. For the reference this feed was 0.35 mm/rev and for the inserts according to the invention it was 0.40 mm/rev. The wear resistance was equal for both types.

## Claims

1. An edge rounded cutting tool insert comprising at least one main cutting edge (2), a connecting nose area (5), a rake face (3) and a clearance face, the main cutting edge (2) having a width W of edge rounding along the rake face and a width H of edge rounding along the clearance face, a W/H ratio in the nose area being at least 1.25 times larger than the W/H ratio in the middle of the main cutting edge (2), the H in the middle of the main cutting edge (2) being at least 1.1 times larger than the H in the nose area (5) characterized in that, the W/H in the middle of the main cutting edge (2) is 1.0 to 1.6, and the W/H in the nose area (5) is 1.5 to 2.3.

## Patentansprüche

1. An Kanten abgerundeter Schneidwerkzeugeinsatz mit wenigstens einer Hauptschneidkante (2), einem Verbindungsnasenbereich (5), einer Spanfläche (3) und einer Freifläche, wobei die Hauptschneidkante (2) eine Breite W einer Kantenabrundung entlang der Spanfläche und eine Breite H einer Kantenrundung entlang der Freifläche hat, das Verhältnis W/H in dem Nasenbereich wenigstens 1,25mal größer als das Verhältnis W/H in der Mitte der Hauptschneidkante (2) ist und das H in der Mitte der Hauptschneidkante (2) wenigstens 1,1mal größer als das H in dem Nasenbereich (5) ist, **dadurch gekennzeichnet**, daß W/H in der Mitte der Hauptschneidkante (2) 1,0 bis 1,6 ist und W/H in dem Nasenbereich (5) 1,5 bis 2,3 ist.

## Revendications

1. Plaquette pour outil de coupe aux arêtes arrondies, comportant au moins une arête de coupe principale (2), une zone de bec de raccordement (5), une face de coupe (3) et une face en dépouille, l'arête de coupe principale (2) présentant une largeur W de l'arrondi de l'arête sur la face de coupe, et une largeur H de l'arrondi de l'arête sur la face en dépouille, la valeur du rapport W/H dans la zone de bec étant égale à au moins 1,25 fois sa valeur au milieu de l'arête de coupe principale (2), la valeur de H au milieu de l'arête de coupe principale (2) étant égale à au moins 1,1 fois sa valeur dans la zone de bec (5), caractérisée en ce que la valeur du rapport W/H au milieu de l'arête de coupe principale (2) est comprise entre 1,0 et 1,6, et en ce que la valeur du rapport W/H dans la zone de bec (5) est comprise entre 1,5 et 2,3.
